# EUROPÄISCHE PATENTANMELDUNG

(11) **EP 0 905 859 A2**
(43) Veröffentlichungstag der Anmeldung: **31.03.1999**
(21) Anmeldenummer: 98810772.8
(22) Anmeldetag: 11.08.1998
(51) Int. Cl.: H02K 3/487

(54) **Nutverschlussanordnung**

(30) Priorität: 29.09.1997 DE 19742900
(71) Anmelder: Asea Brown Boveri AG, 5401 Baden (CH)
(72) Erfinder: Müller, Günter, 8160 Weiz-Nöstl (AT)
(74) Vertreter: Lück, Gert, Dr.

(57) **Zusammenfassung**

Bei einer elektrischen Maschine, die in ihrem Statorblechkörper (10) Wicklungsnuten (1) und Vornuten (2) umfassende Nuten aufweist, werden die in der Wicklungsnut (1) eingebetteten Wicklungsstäbe 3, 4 fixiert durch eine Nutverschlussanordnung (8), welche Nutverschlussanordnung (8) in Doppelfunktion zudem die Vornut (2) gegenüber einem Luftspalt (12) der Maschine verschliesst. Die im wesentlichen aus einem Oberkeil (5), einem Unterkeil (6) und einer Keilbeilage (7) aufgebaute Nutverschlussanordnung (8) bildet mit den die Vornut (2) begrenzenden Nutwänden (13a, b) Strömungskanäle (2a) für ein gasförmiges Kühlmedium zum Kühlen der Zähne (15) des Statorblechkörpers (10) aus.

## Beschreibung

### TECHNISCHES GEBIET

Die Erfindung bezieht sich auf eine Anordnung zum Verschliessen der Nuten des Statorblechpakets einer elektrischen Maschine. Bei der Erfindung wird ausgegangen von einer Nutverschlussanordnung nach dem Oberbegriff des Patentanspruch 1.

Nutverschlussanordnungen genannter Art sind beispielsweise bekannt aus "Brown Boveri Mitteilungen, 54. Jahrgang, September 1967, Nummer 9, Seiten 524 - 526.

### TECHNOLOGISCHER HINTERGRUND UND STAND DER TECHNIK

Bei grossen elektrischen Maschinen, insbesondere Generatoren werden in bekannter Art Wicklungsstäbe in zu einem Luftspalt hin offenen Nuten eines Statorblechpakets eingelegt. Diese Nuten werden dann zur Sicherung der Wicklungsstäbe mit Nutverschlussanordnungen verschlossen gegen den Luftspalt. Um eine maximale Ausnutzung des radial wirkenden Erregerfeldes von einem Generatorrotor zu erzielen, muss der magnetische Fluss im Grenzfall ausschliesslich radial in die durch die Wicklungsnuten gebildeten Zähne des Statorblechpakets eindringen. Da die Nuten aber zum Einlegen der Wicklungsstäbe eine entsprechende Breite aufweisen, ist durch das radiale Eindringen des magnetischen Flusses direkt in die Stäbe ein gewisser Verlustbetrag des magnetischen Flusses zu verzeichnen. Dieser Verlustbetrag kann in bemerkenswerter Weise verringert werden, in dem, wie in der,,Brown Boveri Mitteilungen, 54. Jahrgang, September 1967, Nummer 9, auf den Seiten 524 - 526 gezeigt, die Wicklungsnuten im Statorblechkörper wesentlich tiefer ausgeführt werden, als für das Einbetten der Wicklungsstäbe nötig ist. Derartige Anordnungen weisen also eine Wicklungsnut mit sogenannter, dem Luftspalt der elektrischen Maschine zugewandter Vornut auf. Ziel dieser Anordnung ist es, durch die tiefer liegenden Wicklungsstäbe, den radialen magnetischen Fluss konzentriert in die Zähne des Statorblechpakets zu führen, und somit die Radialfeldverluste markant zu verringern.

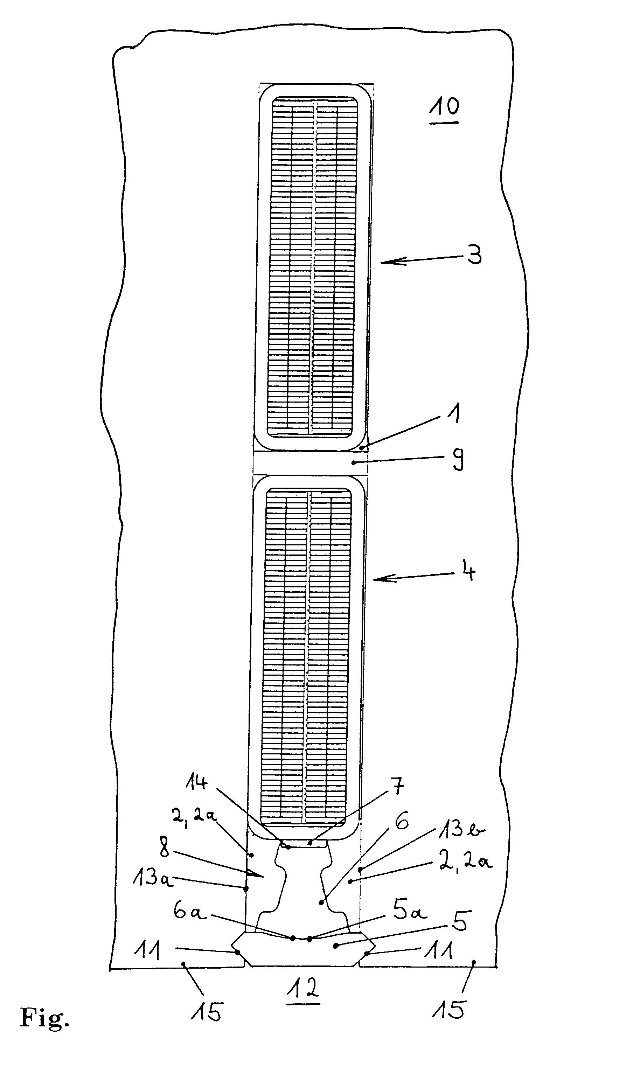

Eine gleichartige Anordnungen von Statorwicklungsstäben in Wicklungsnuten mit Vornuten in einen Blechpaket zeigt ebenfalls die Fig. 4 der US 4,028,569.

Den aus dem zitierten Stand der Technik bekannten Wicklungsnuten mit Vornuten ist gemeinsam, dass sie eine doppelt ausgeführte Nutverschlussanordnung benötigen. Eine erste Nutverschlussanordnung dient dem Verschliessen der Wicklungsnut zum Sichern der Wicklungsstäbe in der Nut, und eine zweite Nutverschlussanordnung verschliesst die Vornut gegenüber dem Luftspalt der Maschine. Der zwischen den ersten und zweiten Nutverschlussanordnungen sich ausbildende kanalartige Raum dient der gezielten Kühlung der in Grenzleistungsmaschinen thermisch hochbelasteten Zähne des Statorblechpakets mittels eines gasförmigen Kühlmittels.

Als entscheidende Nachteile der zweifachen Nutverschlussanordnung werden angesehen, dass sie mit grossem fertigungstechnischem Aufwand ausgeführt werden müssen, wobei eine Inspektion der tiefer liegenden Nutverschlussanordnung für die Wicklungsstäbe nur nach einer Demontage der Nutverschlussanordnungen der Vornut möglich ist, und zudem die Kühlung der Zähne des Statorblechpakets begrenzt ist.

### DARSTELLUNG DER ERFINDUNG

Aufgabe der Erfindung ist es, die genannten Nachteile zu vermeiden, das heisst, eine Nutverschlussanordnung zu schaffen, die auf eine einfache Art ein Verschliessen von Wicklungsnuten und Vornuten umfassenden Nuten in Statorblechkörpern ermöglicht, und dabei eine optimierte Kühlung der sich zwischen den Nuten ausbildenden Zähne des Statorblechpakets erwährleistet. Als weiteres Ziel der Erfindung sollen die die Wicklungsstäbe fixierenden Nutverschlussanordnungen einer direkten Festigkeitsprüfung unterziehbar sein.

Erfindungsgemäss wird die Aufgabe durch die Merkmale des ersten Anspruchs gelöst.

Die Vorteile der Erfindung sind unter anderem darin zu sehen, dass durch eine einzige Nutverschlussanordnung, umfassend einen Oberkeil, einen Unterkeil und eine Keilbeilage, sowohl die Vornut als auch die Wicklungsnut verschlossen wird, das heisst, dass die Krafteinwirkung zum Fixieren der Wicklungsstäbe in einem Statorblechkörper direkt von der die Vornut verschliessende Nutverschlussanordnung auf die Wicklungsstäbe ausgeübt wird, womit folglich die einzige Nutverschlussanordnung im Gegensatz zum Stand der Technik eine Doppelfunktion ausübt.

Bei einer besonders bevorzugten Ausführungsform der Erfindung ist vorgesehen, dass zwischen dem die Vornut verschliessenden Oberkeil und dem Oberstab der Statorwicklung mindestens ein Strömungskanal für ein gasförmiges Kühlmedium bereit gestellt wird. Dieser Strömungskanal ist vergleichsweise bei gleicher Nuttiefe der Wicklungsnut und der Vornut wie beim Stand der Technik gegenüber diesem erheblich grösser, da keine zweite Nutverschlussanordnung benötigt wird.

Weitere vorteilhafte Ausgestaltungen der Erfindung ergeben sich aus den Unteransprüchen.

### KURZE BESCHREIBUNG DER ZEICHNUNG

Die Erfindung wird nachstehend anhand eines Ausführungsbeispiels näher erläutert, und zwar zeigt die einzige

Fig. einen Querschnitt durch eine mit einer Nutverschlussanordnung verschlossene Wicklungsnut mit vorgelagerter Vornut in einem Statorblechpaket.

Es sind nur die für das Verständnis der Erfindung wesentlichen Elemente gezeigt.

### WEG ZUR AUSFÜHRUNG DER ERFINDUNG

Die einzige Figur zeigt im Querschnitt eine Wicklungsnut 1 in einem Statorblechkörper 10 einer elektrischen Maschine, insbesondere Generatorstator, wobei die Wicklungsnut 1 mit einer zu einem Luftspalt 12 hin ausgerichteten Vornut 2 versehen ist. Die Wicklungsnut 1 geht hier übergangslos in die Vornut 2 über. In der Wicklungsnut 1 sind ein Unterstab 3 und ein Oberstab 4 einer Statorwicklung eingebettet. Unterstab 3 und Oberstab 4 sind voneinander mittels einer Zwischenlage 9 beabstandet.

Die Vornut 2 ist zum Luftspalt 12 mit einer Nutverschlussanordnung 8 verschlossen. Die Nutverschlussanordnung umfasst im wesentlichen einen Unterkeil 6, einen Oberkeil 5 und eine Keilbeilage 7. Der Oberkeil 5 und der Unterkeil 6 pressen die Wicklungsstäbe 3 und 4 gegen den Grund der Wicklungsnut 1, indem sich der Oberkeil 5 gegen Ausnehmungen 11 im Statorblechkörper 10 abstützt, wobei zudem die Vornut 2 durch den Oberkeil 5 gegen den Luftspalt 12 verschlossen wird.

Die wirksame Keilfläche des Oberkeils 5 ist mit 5a bezeichnet und die wirksame Keilfläche des Unterkeils 6 mit 6a. Das erfindungsgemässe Ausführungsbeispiel zeigt, dass die Keilfläche 5a des Oberkeils 5 konkav geformt ist, wohingegen die benachbarte Keilfläche 6a des Unterkeils 6 konvex geformt ist. Die konkave Keilfläche 5a und die konvexe Keilfläche 6a sind zudem mit einer gleich grossen und gegeneinander gerichteten Neigung in ihrer Längsrichtung versehen, so dass sie bei einer relativen Bewegung zueinander eine Kraft in radialer Richtung gegen die Wicklungsstäbe 3, 4 ausüben.

Zwischen dem Unterkeil 6 und dem Oberstab 4 ist eine Keilbeilage 7 angeordnet, die auch einen nicht dargestellten Rutschstreifen umfassen kann. Die Keilbeilage 7 ist in einer Nut 14 des Unterstabes geführt gehalten. Typischerweise sind der Oberkeil 5 und der Unterkeil 6 aus einem hochfesten glasfaserverstärkten Kunststoff hergestellt.

Der Unterkeil 6 ist in seinem Querschnitt erheblich schmaler als die Nutbreite der Vornut 2 zwischen den sie begrenzenden Nutwänden 13a und 13b. Somit ergeben sich beiderseits des Unterkeils 6 kanalartige Räume 2a, die zur Kühlung von einem gasförmigen Kühlmittel durchströmt werden. Vergleichsweise zu Stand der Technik ist der Querschnitt der sich ausbildenden Kühlkanäle wesentlich grösser, da die eine Nutverschlussanordnung eine Doppelfunktion erfüllt, nämlich die der Fixierung der Wicklungsstäbe 3, 4 in der Wicklungsnut 1 und die des Verschliessens der Vornut 2. Der gegenüber dem Stand der Technik grössere Kühlkanalquerschnitt erlaubt eine optimale forcierte Kühlung der Zähne 15 des Statorblechkörpers 10.

Die erfindungsgemässe Nutverschlussanordnung 8 bieten neben einem vergrösserten Kühlquerschnitt den Vorteil, dass sie auf einfache Weise einer Inspektion auf Festigkeit unterzogen werden kann. Aufgrund von thermisch und mechanisch bedingten Setzerscheinungen ist es möglich, dass sich die Verkeilung der Wicklungsstäbe 3, 4 lockert. Diese Setzerscheinungen machen eine periodische Inspektion der Nutverschlussanordnungen insbesondere für diejenigen, die die Wicklungsstäbe 3, 4 fixieren nötig. Bisher ist aus dem Stand der Technik bekannt, dass eine Inspektion der die Wicklungsnut 1 unmittelbar verschliessenden Nutverschlussanordnung nur mit grossem Aufwand durchführbar ist, nämlich, wenn zuvor die Nutverschlussanordnung der Vornut 2 komplett entfernt wurde. Die erfindungsgemässe Nutverschlussanordnung 8 mit beschriebener Doppelfunktion ermöglicht nun eine direkte Überprüfung der die Wicklungsstäbe 3, 4 fixierenden Nutverschlussanordnung 8.

Selbstverständlich ist die Erfindung nicht beschränkt auf das dargestellte Ausführungsbeispiel. Denkbar im Sinn der Erfindung sind beispielsweise auch eine andere Form des Unterkeils 6, die einen grösstmöglichen Querschnitt der Kühlkanäle 2a ermöglicht unter der Vorgabe der nötigen Stabilität für die optimalen Übertragung der radial wirkenden Kraft für die Verkeilung. Ebenfalls denkbar ist, die konkave Keilfläche 5a mit einem grösseren Radius zu versehen als die konvexe Keilfläche 6a, und somit eine federnde Verkeilung bereitzustellen.

### BEZUGSZEICHENLISTE

- 1: Nut für Wicklungsstäbe 3, 4
- 2: Vornut
- 2a: Kühlkanal
- 3: Unterstab
- 4: Oberstab
- 5: Oberkeil
- 5a: wirksame Keilfläche von 5
- 6: Unterkeil
- 6a: wirksame Keilfläche von 6
- 7: Keilbeilage
- 8: Nutverschlussanordnung
- 9: Zwischenlage
- 10: Statorblechkörper
- 11: Ausnehmungen in 10
- 12: Luftspalt
- 13a,b: Nutwand
- 14: Nut in 6
- 15: Zahn des Statorblechkörpers

## Patentansprüche

1. Nutverschlussanordnung (8) zum Verschliessen von Nuten (1, 2) eines Statorblechkörpers (10) einer elektrischen Maschine, wobei jede Nut (1, 2) je eine Wicklungsnut (1) und je eine Vornut (2) umfasst, welche Wicklungsnut (1) mit Wicklungsstäben (3, 4) oder Spulen gefüllt ist, und welche Vornut (2) frei von Wicklungsstäben (3, 4) einem Luftspalt (12) zugewandt ist, wobei die Vornut (2) unmittelbar an die Wicklungsnut (1) angrenzt,
dadurch gekennzeichnet,
dass die die Vornut (2) verschliessende Nutverschlussanordnung (8) die Wicklungsstäbe (3, 4) in der Wicklungsnut (1) fixiert.

2. Nutverschlussanordnung (8) nach Anspruch 1,
dadurch gekennzeichnet,
dass sich zwischen der Nutverschlussanordnung (8) und einem in der Wicklungsnut (1) eingelegten Oberstab (4) mindestens ein kanalartiger Raum (2a) ausbildet, der als Strömungskanal für ein gasförmiges Kühlmedium dient.

3. Nutverschlussanordnung (8) nach Anspruch 2,
dadurch der mindestens eine Strömungskanal (2a) im wesentlichen begrenzt wird durch eine erste Nutwand (13a) und eine zweite Nutwand (13b) im Statorblechlkörper (10), durch den Oberstab (4) und einen Oberkeil (5) der Nutverschlussanordnung (8), welcher Oberkeil (5) in Ausnehmungen (11) des Statorblechkörpers (10) angeordnet ist.
